# EUROPÄISCHE PATENTSCHRIFT

(11) **EP 1 757 245 B1**
(45) Veröffentlichungstag und Bekanntmachung des Hinweises auf die Patenterteilung: **21.07.2010**
(21) Anmeldenummer: 05405487.9
(22) Anmeldetag: 22.08.2005
(51) Int. Cl.: A61C 8/00

(54) **Zahnimplantat**
Dental implant
Implant dentaire

(43) Veröffentlichungstag der Anmeldung: 28.02.2007
(73) Patentinhaber: RIEMSER Arzneimittel AG, 17493 Greifswald - Insel Riems (DE)
(72) Erfinder: Rössler, Hans-Dieter, 63801 Kleinostheim (DE); Peters, Fabian, 68259 Mannheim (DE)
(74) Vertreter: AMMANN PATENTANWÄLTE AG BERN

(56) Entgegenhaltungen:
- WO-A-02/17814
- DE-A1- 10 315 399
- US-A1- 2002 025 505
- US-A1- 2004 101 808
- US-A1- 2004 219 488

## Beschreibung

Die vorliegende Erfindung bezieht sich auf ein Zahnimplantat, mit einem konischen Schraubteil mit einem Gewinde, das vom abgerundeten apikalen Ende ausgehend progressiv breiter wird.

Ein solches Zahnimplantat ist aus der US-A-2004/0101808 und der US-B1-6 402 515 bekannt. Das dort offenbarte einfache, progressive Gewinde ist vorgesehen, das Anwachsen des Zahnimplantats im Knochen zu verbessern.

Aus der WO-2004/098442 ist ein einschraubbares Zahnimplantat bekannt, bei dem auf ein relativ grobes Gewinde rillenförmige Vertiefungen eingeprägt sind, die in Richtung der Gewindegänge verlaufen und dort ein sogenanntes Mikrogewinde ergeben, um die Kontaktfläche zwischen Zahnimplantat und Knochengewebe zu vergrössern. Der Gewindestift selber ist im Wesentlichen zylindrisch und das Gewinde ist nicht progressiv ausgebildet.

US-A-5 403 136 offenbart ein Zahnimplantat mit Schraubengewinde, das gegen das zervikale Ende ein Gewinde mit abnehmender Steigung aufweist. Der wesentliche Teil des Stiftes ist zylindrisch und am apikalen Ende eben ausgebildet.

US-A1-2004/0006346 offenbart einen Zahnimplantatstift, der im Wesentlichen zylindrisch ausgebildet ist und ein ebenes apikales Ende aufweist. Der Stift weist zwei verschiedene Gewinde auf, ein relativ grobes Einfachgewinde sowie anschliessend ein sogenanntes Mikrogewinde, das hier als Dreifachgewinde ausgeführt ist.

WO2004/103202 offenbart, wie das erstgenannte US-Patent, ein konisches Zahnimplantat mit einem progressiven Gewinde.

Es ist von diesem Stand der Technik ausgehend eine erste Aufgabe der vorliegenden Erfindung, ein Zahnimplantat zu schaffen, das in einer Kombination von verschiedenen Merkmalen minimalinvasives Einbringen, Gewebeschonung und gute Primärstabilität sowie gutes Anwachsen des Knochens gewährleistet. Diese Aufgabe wird mit dem Zahnimplantat gemäss Patentanspruch 1 gelöst.

Es ist eine weitere Aufgabe der Erfindung, ein Zahnimplantat zu schaffen, das einfach und kostengünstig herzustellen ist und neben einer guten Verankerung einen Aufbau enthält, der die nachfolgenden Arbeitsgänge vereinfacht. Diese Aufgabe wird mit dem Zahnimplantat gemäss dem abhängigen Patentanspruch 5 gelöst.

Weitere Vorteile, wie z. B. eine gute Handhabung, sind in den abhängigen Ansprüchen definiert.

Die Erfindung wird im Folgenden anhand von Zeichnungen von Ausführungsbeispielen näher erläutert werden.
- Fig. 1: zeigt ein erfindungsgemässes Zahnimplantat in Draufsicht,
- Fig. 1A: zeigt einen teilweisen Schnitt der Fig. 1,
- Fig. 1B: zeigt eine Ansicht von links der Fig. 1,
- Fig. 2: zeigt einen Aufbau für das Zahnimplantat von Fig. 1 in Frontansicht,
- Fig. 3: zeigt den Aufbau gemäss dem Schnitt III - III in Fig. 2,
- Fig. 4: zeigt eine Halteschraube,
- Fig. 5: zeigt eine Verschlussschraube,
- Fig. 6: zeigt einen mit dem Zahnimplantat verschraubten Aufbau,
- Fig. 7: zeigt eine Snap-on-Kappe in Frontansicht,
- Fig. 8: zeigt die Snap-on-Kappe gemäss der Linie VIII - VIII in Fig.7,
- Fig. 9: zeigt ein versandfertiges, mit einem Aufbau zusammengesetztes Zahnimplantat und einer Snap-on-Kappe,
- Fig. 10: zeigt eine Ausführungsvariante zur Ausführung gemäss Fig. 7, mit einem Transferteil in Frontansicht,
- Fig. 11: zeigt das Transferteil gemäss der Linie XI - XI in Fig. 10, und
- Fig. 12: zeigt ein versandfertiges Zahnimplantat mit einem Transferteil.

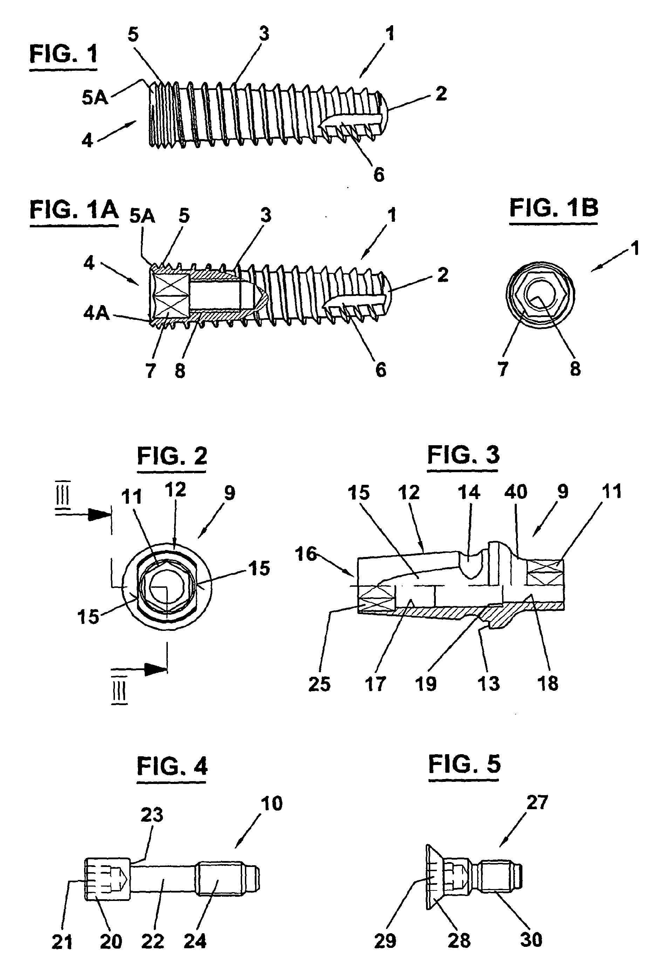

Die Figuren 1, 1A und 1B zeigen ein Zahnimplantat 1, vorzugsweise aus reinem Titan gefertigt, mit dem abgerundeten apikalen Ende 2, dem progressiven, Mehrfachgewinde 3, in diesem Ausführungsbeispiel ein zweigängiges, selbstschneidendes Gewinde, das sich vom apikalen Ende her nach dem anderen, zervikalen Ende 4 hin verbreitert und woran sich ein Mikro-Gewinde 5 anschliesst, ebenfalls ein Mehrfachgewinde, z.B. ein dreigängiges Gewinde.

Dem Mikrogewinde 5 schliesst sich zum zervikalen Ende 4 hin eine Verjüngung 5A an und das Implantat weist eine nach Innen gerichtete Abschrägung 4A auf. Beide Massnahmen ermöglichen ein besseres Anwachsen des Knochens und verhindern somit seine Resorption und fördern das Wachstum des Bindegewebes beim zervikalen Ende des Implantats. Bei der Verwendung eines Aufbaus mit einer gewölbten Stufe wird mit der Verjüngung und der Abschrägung die wirksame biologische Breite vergrössert.

Das abgerundete apikale Ende verhindert beim Eindrehen des Zahnimplantates weitgehend die Verletzung anatomischer Strukturen wie Sinusboden, Nasenboden, Nervus mandibularus oder Schleimhaut.

Das Zahnimplantat 1 weist ferner eine konische Form auf, die sich zum apikalen Ende 2 hin verjüngt, wodurch sich die Primärstabilität im Vergleich zu einer zylindrischen Zahnimplantatform beim Eindrehen in eine gerade Kavität erhöht und zu einer perfekten Adaption im zervikalen Bereich führt.

Das progressive Mehrfachgewinde verbessert die Primärstabilität erheblich. Eine hohe mechanische Primärstabilität ist für die Sofort- bzw. Frühbelastung des Zahnimplantates die wichtigste Voraussetzung. Durch das progressive Gewinde werden Mikrobewegungen des inserierten Zahnimplantats weitgehend verhindert und dadurch dessen Einheilung und die Integration des Knochens gefördert.

Im zervikalen Bereich geht das progressive Gewinde in ein Mehrfach-Mikrogewinde über, um in der Corticalis eine zu hohe Kompression und eine Nekrose zu vermeiden. Das Zahnimplantat weist ferner im apikalen Bereich Schneidnuten 6 auf, beispielsweise zwei, die auch als Entlastungsnuten für die Knochenspäne dienen.

Aus den Figuren 1A und 1B geht hervor, dass das Zahnimplantat am zervikalen Ende einen Innensechskant 7 aufweist, dem sich eine Bohrung 8 mit Gewinde anschliesst.

Die Figuren 2 und 3 zeigen einen Aufbau 9, der mittels einer Halteschraube 10, siehe Fig. 4, am Zahnimplantat befestigbar ist. Der Aufbau ist vorzugsweise auch aus Reintitan gefertigt und weist ein als Sechskant ausgebildetes Verbindungsteil 11 auf, der in den Innensechskant 7 des Zahnimplantats passt. Diesem Sechskant 11 schliesst sich ein multifunktionaler Pfosten 12 an, der, vom Verbindungsteil ausgehend, eine Plattform 13 aufweist und sich von dort zum Ende hin verjüngt. Nahe der Plattform 13 befindet sich eine umlaufende Rille 14 und längs des Pfostens sind zwei sich gegenüberliegende Abflachungen 15 angeordnet.

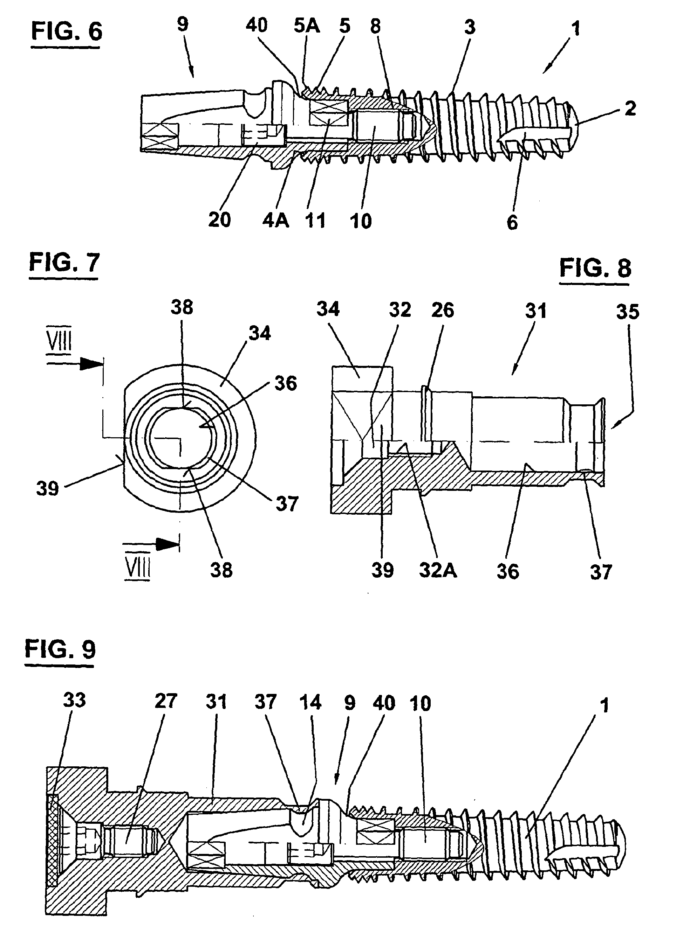

Die Rille im zervikalen Bereich des Pfostens ermöglicht den Einsatz einer Snap-on-Technik für verschiedene Teile, die einfach zu handhaben, sehr präzise und zeitsparend ist. Dies gilt insbesondere für den Transfer, für die Befestigung der provisorischen Krone oder für die Abdrucknahme mit einer multifunktionalen Snap-on-Kappe, siehe Figuren 7 - 9. Ausserdem dient die Rille dazu, beim Einsetzen der endgültigen Versorgung eine optimale Verteilung des Befestigungszementes zu ermöglichen.

Wie aus Fig. 2 hervorgeht, ist der Aufbau als Hülse ausgebildet und weist eine durchgehende Bohrung mit zwei verschiedenen Durchmessern auf. Vom zervikalen Ende 16 aus gesehen ist der Durchmesser der Bohrung 17 grösser als derjenige der anschliessenden Bohrung 18, womit ein Absatz 19 gebildet wird, auf dem sich der Kopf der Halteschraube abstützt. Am zervikalen Ende ist ein Innensechskant 25 angeordnet, mittels welchem das Implantat mit dem Aufbau durch einen Sechskantdreher in den Knochen eingedreht wird.

Die Halteschraube 10 dient dazu, den Aufbau am Zahnimplantat zu befestigen und ist dementsprechend ausgebildet. In Fig. 4 von links nach rechts beschrieben enthält die Halteschraube einen Kopf 20 mit Innensechskant 21, ein zylindrisches Teil 22 und dazwischen einen Absatz 23 und anschliessend an den zylindrischen Teil ein Gewinde 24, das der Bohrung mit Gewinde 8 im Zahnimplantat entspricht.

Aus Fig. 6, eine Zusammenstellung des Zahnimplantats mit dem Aufbau, geht hervor, dass sich die Halteschraube 10 durch den Aufbau hindurch erstreckt und mit einem Sechskantdreher in das Zahnimplantat eingeschraubt werden kann. Dabei stützt sich der Absatz 23 der Halteschraube 10 auf dem Absatz 19 des Aufbaus ab, so dass beim Eindrehen der Halteschraube der Aufbau und das Zahnimplantat zusammengezogen und gesichert wird.

Wie aus der Zusammenstellung von Fig. 6 hervorgeht, besitzt der Aufbaupfosten 12 einen kleineren Durchmesser als das Zahnimplantat, um die Gewebeanlagerung von Weich- und Hartgewebe zu unterstützen und langfristig die Knochenresorption sowie die Infektionsgefahr zu verhindern. Der multifunktionale Pfosten 12 ist einheitlich für alle Zahnimplantate dieses Systems, auch bei unterschiedlichen Durchmessern zu verwenden und dient
a) als Transferpfosten von der doppelt sterilen Verpackung in die vorgebohrte Kavität,
b) zum Eindrehen in die vorgebohrte Kavität,
c) als provisorischer Pfosten und
d) als endgültiger Pfosten.

Die beiden Abflachungen 15 des Pfostens dienen einmal dazu, die Krone verdrehsicher einzuzementieren und ein achsengerechtes Positionieren zu erreichen. Dadurch wird der präzise Transfer ermöglicht.

Die Pfosten sind vorzugsweise kodiert, indem sie z.B. bicolor markiert sind, um Verwechslungen zu vermeiden. Dabei können die flachen Flächen unbearbeitet oder ungefärbt belassen werden.

Um eine stabile Press-Fit-Passung zwischen Aufbau und Zahnimplantat zu erzielen, weist der Sechskant 11 und der Innensechskant 7 des Zahnimplantats eine Konizität von 0,5° - 7° auf. Dadurch wird auch eine exakte Übertragung ermöglicht, weil keine Wackelbewegungen auftreten können, die bei geraden Flächen wegen der notwendigen Toleranz unvermeidbar sind.

Die biologische Breite, der Bindegewebüberzug beim zervikalen Implantatende, beträgt nach Tarnow und anderen Autoren 1,5 bis 3,5 mm. Die vorpräparierte Stufe 40 am Befestigungsteil des Aufbaus von etwa 1,7 bis 2,1 mm, vorzugsweise 1,9 mm, über dem Zahnimplantatende, berücksichtigt diese biologische Breite der Weichteile, was erhebliche Vorteile für den Langzeiterfolg aus ästhetischer und funktioneller Sicht bringt. Dieser Effekt wird durch die Verjüngung 5A und die Abschrägung 4A am zervikalen Implantatende unterstützt.

Der beschriebene Aufbau mit dem Pfosten mit einer umlaufenden Rille für eine Snap-on Technik ist nicht nur für das Eingangs beschriebene Implantat 1 vorteilhaft sondern auch für andere Typen von Implantaten, wobei dann das Verbindungsteil entprechend ausgebildet sein muss und anstatt einen Sechskant andere Kopplungsmittel aufweisen kann.

Falls das Zahnimplantat ohne Aufbau einwachsen soll ist es unerlässlich, seine Öffnung 7 und 8 zu verschliessen. Dazu dient die Verschlussschraube 27 von Fig. 5, die einen Versenkkopf 28 mit Innensechskant 29 und ein Gewinde 30 aufweist, das in das Gewinde 8 des Zahnimplantates passt.

In der zum Versand fertigen Verpackung gemäss Fig. 9 ist diese Verschlussschraube am hinteren Teil einer Snap-on-Kappe 31 in einer entsprechenden Ausnehmung 32 eingedreht und mittels einer Abdeckung 33 gesichert.

Die multifunktionale Snap-on-Kappe 31 ist aus einem ausbrennbaren Kunststoff gefertigt und kann, wie ihr Name aussagt, verschiedene Funktionen ausführen:
a) Als Einbringhilfe für den Transfer aus der sterilen Verpackung in die vorgebohrte Kavität und zum Eindrehen von ein bis zwei Umdrehungen dienen.
b) Als Basis für die provisorische Krone dienen, die exakt eingepasst werden kann. Die Befestigung der Krone erfolgt mittels der beschriebenen Snap-on-Technik und provisorischem Zement.
c) Der exakten Übertragung als Abdruckkappe in Verbindung mit vorgefertigten Labor-Zahnimplantaten dienen. Die Form der Snap-on-Kappe ist auf den Pfosten des Aufbaus abgestimmt.
d) Als vormodellierte Kronenbasis für den Zahntechniker und als Basis für die endgültige Versorgung dienen, nach dem der Techniker den Aufnahmering 34 weggefräst hat.

Die Snap-on-Kappe ermöglicht in der Zusammenarbeit von Zahnarzt und Zahntechniker insgesamt einen ökonomischen Arbeitsablauf mit Zeitersparnis und hoher Präzision.

Die Snap-on-Kappe weist an ihrem apikalen Ende 35 eine Bohrung 36 mit Einschnürung 37 auf, die der Rille 14 des Aufbaupfostens entspricht. Somit kann die Snap-on-Kappe auf den Aufbaupfosten aufgeschnappt werden, um dort sicher befestigt zu sein. Ausserdem weist sie an ihrem Umfang einen Wulst 26 auf.

Damit die Snap-on-Kappe als Eindrehhilfe verwendet werden kann, muss sie gegenüber dem Aufbaupfosten drehsicher gehalten werden. Dies wird dadurch erreicht, dass die Snap-on-Kappe in der Innenbohrung 36 zwei sich gegenüberliegende ebene Flächen 38 aufweist, die mit den beiden Abflachungen 15 des Aufbaupfostens zusammenwirken.

Die Verschlussschraube 27 ist in einem Aufnahmering 34 der Kappe eingesetzt, der eine Abflachung 39 aufweist, die der Sicherung einer Krone dient.

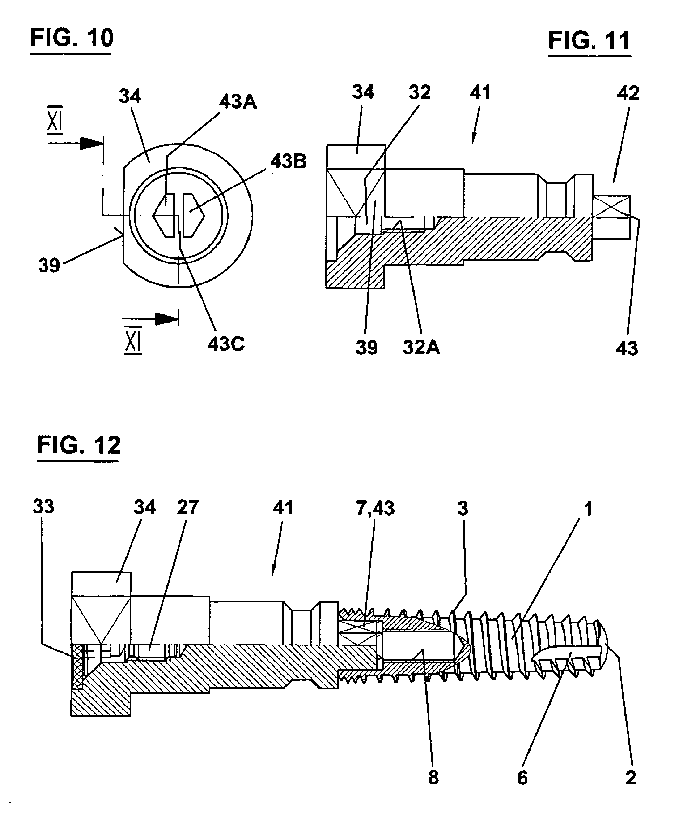

In den Figuren 10 - 12 ist ein Transferteil 41 dargestellt, der direkt mit dem Implantat 1 verbunden werden kann und nicht mit dem Aufbau wie im vorhergehenden Beispiel. Dazu weist das Transferteil an seinem apikalen Ende 42 einen Sechskant 43 auf, der aus zwei Hälften 43A und 43B besteht, wobei die Hälften durch einen Spalt 43C getrennt sind, wodurch sie federnd sind. Dieser Sechskant entspricht dem Innensechskant 7 des Implantats und kann ebenfalls eine Konizität von 0,5° bis 7° aufweisen.

Die übrigen Ausbildungen und Merkmale sowie Vorteile und Anwendungsmöglichkeiten des Transferteils 41 entsprechen denjenigen der Snap-on-Kappe 31 gemäss den Figuren 7-9. Dies gilt auch für die Aufnahme einer Verschlussschraube 27. In Figur 12 ist das Implantat mit dem Transferteil teilweise geschnitten eingezeichnet.

## Patentansprüche

1. Zahnimplantat, mit einem konischen Schraubteil mit einem Gewinde (3), das vom abgerundeten apikalen Ende (2) ausgehend progressiv breiter wird, **dadurch gekennzeichnet, dass** das Gewinde (3) mehrgängig ist und dass sich diesem ein mehrgängiges Mikrogewinde (5) anschliesst, dessen Steigung kleiner als die Steigung des progressiven Gewindes (3) ist.

2. Zahnimplantat nach Anspruch 1, **dadurch gekennzeichnet, dass** es einen sich verjüngenden Innensechskant (7) aufweist, wobei die Konizität 0,5° bis 7° beträgt.

3. Zahnimplantat nach Anspruch 1 oder 2, **dadurch gekennzeichnet, dass** sich dem Mikrogewinde (5) gegen das zervikale Ende (4) hin eine gegen die Mitte gerichtete Verjüngung (5A) anschliesst.

4. Zahnimplantat nach einem der Ansprüche 1 bis 3, **dadurch gekennzeichnet, dass** das zervikale Ende (4) eine nach innen gerichtete Abschrägung (4A) aufweist.

5. Zahnimplantat nach einem der Ansprüche 1 bis 4 mit einem Aufbau (9), **dadurch gekennzeichnet, dass** der Aufbau (9) ein Verbindungsteil (11) und einen Pfosten (12) mit einer Rille (14) aufweist.

6. Zahnimplantat nach Anspruch 5, **dadurch gekennzeichnet, dass** der Aufbau als Hülse ausgebildet ist und mittels einer Halteschraube (10) am Implantat befestigbar ist.

7. Zahnimplantat nach Anspruch 6, **dadurch gekennzeichnet, dass** das Implantat eine Bohrung mit Gewinde (8) und die Halteschraube ein entsprechendes Gewinde (24) aufweist.

8. Zahnimplantat nach einem der Ansprüche 5 bis 7, **dadurch gekennzeichnet, dass** das Verbindungsteil ein Sechskant (11) ist.

9. Zahnimplantat nach einem der Ansprüche 5 bis 8, **dadurch gekennzeichnet, dass** der Aufbau (9) ein gewölbtes Teil (40) aufweist, das an den Sechskant (11) anschließt.

10. Zahnimplantat nach einem der Ansprüche 5 bis 9, **dadurch gekennzeichnet, dass** der Pfosten (12) einen kleineren Durchmesser aufweist als das Zahnimplantat.

11. Zahnimplantat nach einem der Ansprüche 5 bis 10, **dadurch gekennzeichnet, dass** der Pfosten (12) Abflachungen (15) aufweist.

12. Zahnimplantat nach einem der Ansprüche 5 bis 11, **dadurch gekennzeichnet, dass** der Pfosten (12) an seinem zervikalen Ende (16) einen Innensechskant (25) aufweist.

13. Zahnimplantat nach einem der Ansprüche 5 bis 12, **dadurch gekennzeichnet, dass** der Innensechskant (7) des Implantats und der Sechskant (11) des Aufbaus eine Konizität von 0,5° bis 7° aufweisen.

14. Zahnimplantat mit Aufbau nach einem der Ansprüche 5 bis 13, mit einer multifunktionalen Snap-on-Kappe (31), die in der Rille (14) des Pfostens (12) eingeschnappt ist.

15. Zahnimplantat nach Anspruch 14, **dadurch gekennzeichnet, dass** die Snap-on-Kappe am apikalen Ende (35) eine Bohrung (36) mit einem der Rille (14) am Pfosten (12) entsprechenden Innenwulst (37) und den Abflachungen (15) am Pfosten (12) entsprechenden Innenflächen (38) aufweist.

16. Zahnimplantat nach einem der Ansprüche 1 bis 4, **dadurch gekennzeichnet, dass** daran ein Transferteil (41) angeordnet ist, wobei das Transferteil ein als Sechskant (43) ausgebildetes, in den Innensechskant (7) des Implantats steckbares Verbindungsteil aufweist.

17. Zahnimplantat nach Anspruch 16, **dadurch gekennzeichnet, dass** der Sechskant (43) federnd ausgebildet ist und zwei Hälften (43A, 43B) sowie einen dazwischen angeordneten Spalt (43C) aufweist.

18. Zahnimplantat nach einem der Ansprüche 14 bis 17, **dadurch gekennzeichnet, dass** die Snap-on-Kappe oder das Transferteil am zervikalen Ende eine verschliessbare Bohrung (32) zur Aufnahme einer Verschlussschraube (27) für das Implantat enthält.

## Claims

1. Tooth implant, having a conical screw portion with a thread (3) which becomes progressively wider from the rounded apical end (2), **characterised in that** the thread (3) is multiple and is adjoined by a multiple micro-thread (5) whose pitch is smaller than the pitch of the progressive thread (3).

2. Tooth implant according to claim 1, **characterised in that** it has a tapering hexagon socket (7), the conicity being from 0.5° to 7°.

3. Tooth implant according to claim 1 or 2, **characterised in that** the micro-thread (5) is adjoined towards the cervical end (4) by a tapered portion (5A) oriented towards the centre.

4. Tooth implant according to any one of claims 1 to 3, **characterised in that** the cervical end (4) has an inwardly oriented chamfer (4A).

5. Tooth implant according to any one of claims 1 to 4 with an abutment (9), **characterised in that** the abutment (9) has a connecting portion (11) and a post (12) with a groove (14).

6. Tooth implant according to claim 5, **characterised in that** the abutment is constructed as a sleeve and may be fastened to the implant by means of a retaining screw (10).

7. Tooth implant according to claim 6, **characterised in that** the implant has a bore with a thread (8) and the retaining screw has a corresponding thread (24).

8. Tooth implant according to any one of claims 5 to 7, **characterised in that** the connecting portion is a hexagonal element (11).

9. Tooth implant according to any one of claims 5 to 8, **characterised in that** the abutment (9) has a curved portion (40) adjoining the hexagonal element (11).

10. Tooth implant according to any one of claims 5 to 9, **characterised in that** the post (12) has a smaller diameter than that of the tooth implant.

11. Tooth implant according to any one of claims 5 to 10, **characterised in that** the post (12) has flat portions (15).

12. Tooth implant according to any one of claims 5 to 11, **characterised in that** the post (12) has a hexagon socket (25) at its cervical end (16).

13. Tooth implant according to any one of claims 5 to 12, **characterised in that** the hexagon socket (7) of the implant and the hexagonal element (11) of the abutment have a conicity of from 0.5° to 7°.

14. Tooth implant with abutment according to any one of claims 5 to 13, having a multifunctional snap-on cap (31) which is snapped into the groove (14) of the post (12).

15. Tooth implant according to claim 14, **characterised in that** the snap-on cap has at the apical end (35) a bore (36) with an internal bead (37) corresponding to the groove (14) in the post (12), and internal surfaces (38) corresponding to the flat portions (15) on the post (12).

16. Tooth implant according to any one of claims 1 to 4, **characterised in that** a transfer part (41) is disposed thereon, wherein the transfer part has a connecting portion which is constructed as a hexagonal element (43) and which may be plugged into the hexagon socket (7) of the implant.

17. Tooth implant according to claim 16, **characterised in that** the hexagonal element (43) is constructed to be resilient and has two halves (43A, 43B) and a gap (43C) arranged therebetween.

18. Tooth implant according to any one of claims 14 to 17, **characterised in that**, at the cervical end, the snap-on cap or the transfer part contains a closable bore (32) for receiving a closure screw (27) for the implant.

## Revendications

1. Implant dentaire, avec une partie vis conique munie d'un filetage (3) lequel s'élargit progressivement à partir de l'extrémité apicale (2) arrondie, **caractérisé en ce que** le filetage (3) est multiple et est suivi d'un microfiletage (5) multiple dont le pas est inférieur au pas du filetage progressif (3).

2. Implant dentaire selon la revendication 1, **caractérisé en ce qu'**il présente un six pans creux (7) aminci, la conicité étant comprise entre 0,5° et 7°.

3. Implant dentaire selon la revendication 1 ou 2, **caractérisé en ce que** le microfiletage (5) est suivi vers l'extrémité cervicale (4) d'un rétrécissement (5A) orienté vers le centre.

4. Implant dentaire selon l'une quelconque des revendications 1 à 3, **caractérisé en ce que** l'extrémité cervicale (4) présente un chanfrein (4A) orienté vers l'intérieur.

5. Implant dentaire selon l'une quelconque des revendications 1 à 4 avec un pilier (9), **caractérisé en ce que** le pilier (9) comporte un élément de connexion (11) et un tenon (12) muni d'une rainure (14).

6. Implant dentaire selon la revendication 5, **caractérisé en ce que** le pilier est en forme de douille et peut être fixé à l'implant au moyen d'une vis de retenue (10).

7. Implant dentaire selon la revendication 6, **caractérisé en ce que** l'implant présente un alésage muni d'un taraudage (8) et la vis de retenue un filetage (24) correspondant.

8. Implant dentaire selon l'une quelconque des revendications 5 à 7, **caractérisé en ce que** l'élément de connexion est un élément hexagonal (11).

9. Implant dentaire selon l'une quelconque des revendications 5 à 8, **caractérisé en ce que** le pilier (9) comporte une partie bombée (40) adjacente à l'élément hexagonal (11).

10. Implant dentaire selon l'une quelconque des revendications 5 à 9, **caractérisé en ce que** le tenon (12) présente un diamètre inférieur à celui de l'implant dentaire.

11. Implant dentaire selon l'une quelconque des revendications 5 à 10, **caractérisé en ce que** le tenon (12) présente des méplats (15).

12. Implant dentaire selon l'une quelconque des revendications 5 à 11, **caractérisé en ce que** le tenon (12) présente à son extrémité cervicale (16) un six pans creux (25).

13. Implant dentaire selon l'une quelconque des revendications 5 à 12, **caractérisé en ce que** le six pans creux (7) de l'implant et l'élément hexagonal (11) du pilier présentent une conicité de 0,5° à 7°.

14. Implant dentaire avec pilier selon l'une quelconque des revendications 5 à 13, comprenant une coiffe multifonctionnelle encliquetable (31) encliquetée dans la rainure (14) du tenon (12).

15. Implant dentaire selon la revendication 14, **caractérisé en ce que** la coiffe encliquetable présente à l'extrémité apicale (35) un alésage (36) avec un bourrelet intérieur (37) correspondant à la rainure (14) dans le tenon (12) et des faces intérieures (38) correspondant aux méplats (15) du tenon (12).

16. Implant dentaire selon l'une quelconque des revendications 1 à 4, **caractérisé en ce qu'**un élément de transfert (41) est agencé sur celui-ci, ledit élément de transfert comportant un élément de connexion sous la forme d'un élément hexagonal (43) qui est enfichable dans le six pans creux (7) de l'implant.

17. Implant dentaire selon la revendication 16, **caractérisé en ce que** l'élément hexagonal (43) est élastique et présente deux moitiés (43A, 43B) et une fente (43C) agencée entre celles-ci.

18. Implant dentaire selon l'une quelconque des revendications 14 à 17, **caractérisé en ce que** la coiffe encliquetable ou l'élément de transfert comportent à l'extrémité cervicale un alésage (32) obturable destiné à recevoir un vis de fermeture (27) pour l'implant.
